# EUROPEAN PATENT APPLICATION

(11) **EP 1 138 695 A1**
(43) Date of publication of application: **04.10.2001**
(21) Application number: 01104924.4
(22) Date of filing: 28.02.2001
(51) Int. Cl.: C08B 37/00, C08L 5/00

(54) **Biodegradable elastomer, item made of the same and production method of item**

(30) Priority: 29.02.2000 JP 2000054470
(71) Applicant: CANON KABUSHIKI KAISHA, Tokyo (JP)
(72) Inventor: Minami, Masato, Ohta-ku, Tokyo (JP)
(74) Representative: Weser, Wolfgang, Dr. Dipl.-Phys.

(57) **Abstract**

A biodegradable elastomer obtained by blending a sugar polymer compound having the general formula (I) with a cross-linking agent having the general formula (II) or (III). 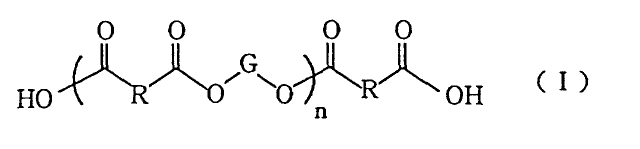 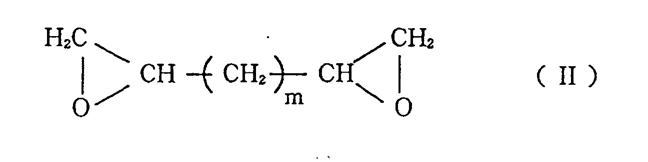 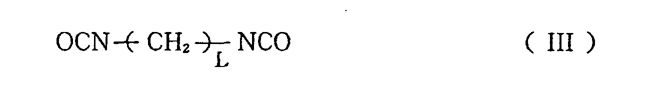 wherein, G denotes a sugar residue of which at least one hydroxyl group not participating in polymerization may be substituted with an ester group; R denotes a substituted or unsubstituted aliphatic hydrocarbon group having 4 to 16 carbons; and n denoting the polymerization degree is an integer from 1 to 5,000; m is 0 or an integer of from 1 to 12; and L is an integer of from 1 to 12.

## Description

### BACKGROUND OF THE INVENTION

### Field of the Invention

The present invention relates to an elastomer comprised of a sugar polymer and a cross linking agent. More specifically, it relates to a biodegradable elastomer, an item made of the elastomer and the method for producing the item.

### Related Background Art

As the well-known conventional elastomers, there are diene rubber, olefin rubber, silicone rubber, urethane rubber, fluororubber, polysulfide rubber and natural rubber. However, when they are discarded as waste in a landfill, most of the elastomer composition are not degradable and would remain for a long period of time causing environmental pollution.

Japanese Patent Application Laid-Open No. 6-166782 discloses a composition of a biodegradable resin and an elastomer. Since the elastomer is not biodegradable, when the discarded composition is disposed in a landfill, the elastomer will remain intact. Thus, there still remains concern for the environment protection.

Recently, global pollution has become outstanding, and consideration to the environment is required when industrial wastes and household wastes are disposed. In addition to the studies of biodegradable resins which are less burdensome to the environment, demands for biodegradable elastomers are increasing.

As described above, when conventional elastomers are disposed in a landfill, most of the elastomer composition is not degraded and will remain in soil for a long time, causing environmental pollution. If elastomers are biodegradable, the load to the environment will be lessened.

### SUMMARY OF THE INVENTION

An object of the present invention is to solve the foregoing problem of the prior art and to provide a biodegradable elastomer to lessen the load on the environment, items made of the elastomer, and a method for producing such items.

The above described purpose can be achieved by the present invention as follows.

According to one aspect of the present invention, there provided is a biodegradable elastomer obtained by blending a sugar polymer compound represented by general formula (I) with a diepoxide represented by general formula (II) as a cross-linking agent: 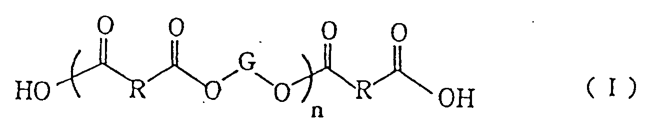 wherein G denotes a unsubstituted sugar residue or a sugar residue of which at least one hydroxyl group not participating in polymerization is substituted with an ester group; R denotes a substituted or unsubstituted aliphatic hydrocarbon group having 4 to 16 carbons; and n is an integer of from 1 to 5,000, 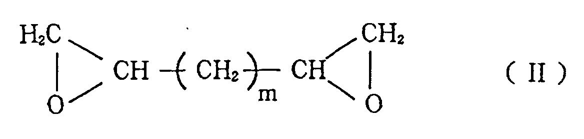 wherein, m is 0 or an integer of from 1 to 12.

According to another aspect of the present invention, there provided is a biodegradable elastomer obtained by blending a sugar polymer compound represented by general formula (I) with a diisocyanate represented by general formula (III) as a cross-linking agent: 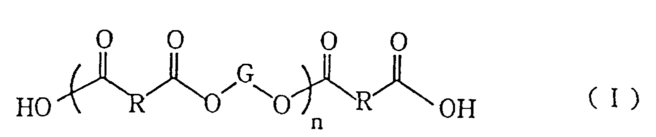 wherein, G denotes a unsubstituted sugar residue or a sugar residue of which at least one hydroxyl group not participating in polymerization is substituted with an ester group; R denotes a substituted or unsubstituted aliphatic hydrocarbon group having 4 to 16 carbons; and n is an integer of from 1 to 5,000, 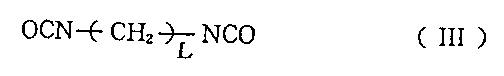 wherein, L denotes an integer from 1 to 12.

According to a still further aspect of the present invention, there provided is an item being produced by forming one of the above mentioned biodegradable elastomers.

According to a still further aspect of the present invention, there provided is a method for producing an item which comprises a step of forming one of the above mentioned biodegradable elastomers by applying heat and pressure to the elastomer.

The inventors of the present invention have studied sugar polymer compounds being a copolymer of sugar and dicarboxylic acid, and found that certain sugar polymer compounds are biodegradable and show excellent rubber elasticity when thermoformed with a cross-linking agent, to complete the present invention.

The elastomer of the present invention can biologically be decomposed in soil or in compost to reduce the load on the environment.

According to the present invention, an elastomer obtained by mixing a sugar polymer compound with a diepoxide or a diisocyanate as a cross-linking agent has both the excellent rubber elasticity and excellent biodegradability. Further, since such an elastomer is composed of sugars, aliphatic dicarboxylic acid and a cross-linking agent, it would not affect the environment on waste disposal, being an elastomer excellent in compatibility with the environment.

Further, items made of the biodegradable elastomer of the present invention can be produced easily by applying heat and pressure to a mixture of a sugar polymer and a cross-linking agent in a molding die of a desired shape.

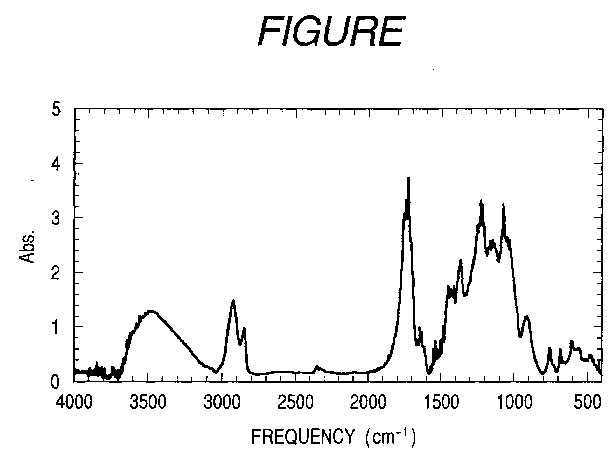

### BRIEF DESCRIPTION OF THE DRAWING

FIGURE is an infrared absorption spectrum of a sugar polymer compound (compound No. 1-1) synthesized by Synthesis Example 1.

### DETAILED DESCRIPTION OF THE PREFERRED EMBODIMENT

The present invention is now described in detail with preferable embodiments.

First described is a biodegradable elastomer of the present invention obtained by mixing a sugar polymer compound represented by general formula (I) and a cross-linking agent represented by general formula (II) or (III).

A sugar polymer compound, which is a main component of a biodegradable elastomer of the present invention, has a structure represented by the following general formula (I).

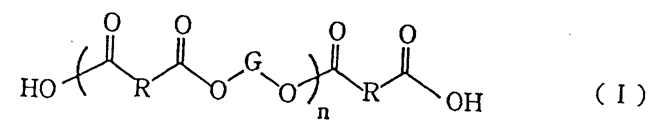

In the general formula (I), G denotes a sugar residue in which some of hydroxyl groups not participating to polymerization may be partly substituted with ester groups such as acetyl group and propionyl group. R denotes an aliphatic hydrocarbon group having 4 to 16 carbons, or a substituted aliphatic hydrocarbon group having 4 to 16 carbons, preferably an aliphatic hydrocarbon group of 4 to 8 carbons. n denotes polymerization degree being an integer of from 1 to 5,000, preferably 100 to 1,000.

A sugar polymer compound represented by the general formula (I) can be synthesized by one of following methods: an ester bond formation between an hydroxyl group of a sugar and a COOH group or acid anhydride group of a dicarboxylic acid, or a COCl group of a dicarboxylic acid chloride, transesterification between a dicarboxylic acid ester and a sugar, and an enzymatic reaction, for example. The weight average molecular weight of a sugar polymer compound having the general formula (I) and produced by such a method is preferably 10,000 to 3,000,000 and more preferably 100,000 to 1,000,000.

Sugars usable for the present invention include monosaccharides, such as glucopyranose, mannopyranose and galactopyranose, and oligosaccharides such as maltose, lactose, cellobiose, isomaltose, nigerose, trehalose, melibiose, cellotriose, chitotriose, maltotriose, cellotetraose, chitotetraose, maltotetraose, cellopentaose, maltopentaose, chitopentaose, cellohexaose, maltohexaose, chitohexaose, and the like. Some of hydroxyl groups of these saccharides nothing to do with the polymerization may be substituted with an ester group such as acetyl group.

Dicarboxylic acids usable in the present invention are aliphatic dicarboxylic acids having a main chain of 4 to 16 carbons, preferably of 4 to 8 carbons. The main chains of the dicarboxylic acids may be substituted with other groups. Examples of such dicarboxylic acids are adipic acids, pimelic acid, suberic acid, azelaic acid, sebacic acid, 1,10-decanedicarboxylic acid, tridecanedicarboxylic acid, hexadecanedicarboxylic acid, octadecanedicarboxylic acid and the like. Further, as described above, acid anhydride or acid chlorides of the above dicarboxylic acids may be used to react with sugars. Accordingly, R in the general formula (I) denotes a dicarboxylic acid or a dicarboxylic acid derivative from which carboxyl groups are eliminated.

As a cross-linking agent to form a biodegradable elastomer of the present invention, diepoxides defined as the general formula (II) and diisocyanates defined as the general formula (III) can be used.

When a diepoxide is used, a diepoxide having the following general formula (II) is blended with a sugar polymer compound and then thermoformed to carry out the cross-linking reaction of the diepoxide and hydroxyl groups in the sugar polymer compound to form a three-dimensional structure and to provide the rubber elasticity.

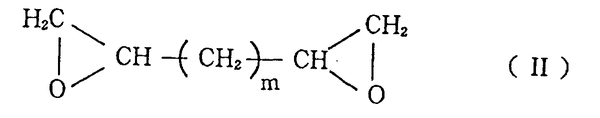

In the general formula (II), m denotes 0 or an integer of from 1 to 12. When m is 0, the diepoxide has the following structural formula.

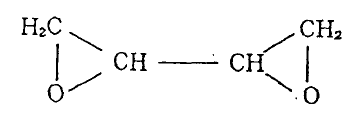

The amount of the diepoxide to be added is preferably 5 to 40 wt.%, more preferably 10 to 35 wt.%. If the amount of the diepoxide is less than 5 wt.%, the network by cross-linking of the sugar polymer compound becomes insufficient leading to insufficient rubber elasticity. On the other hand, if the amount of the diepoxide is more than 40 wt.%, the cross-linking becomes dense to make the elastomer solid, leading to insufficient rubber elasticity.

The diepoxide can be mixed with a sugar polymer compound, for example, by uniformly dissolving the diepoxide and a sugar polymer compound in a solvent (e.g. acetone) which is inert to the diepoxide and capable of dissolving the sugar polymer compound, followed by removing the solvent and sufficiently drying to give a precursor of an elastomer. Any method is applicable so long as it can evenly blend the diepoxide and the sugar polymer compound.

When a diisocyanate having the following general formula (III) is used, it is blended with a sugar polymer compound and then subjected to thermoforming, whereby the cross-linking reaction of the diisocyanate and the hydroxyl groups of the sugar polymer compound occurs to form a three-dimensional structure for the rubber elasticity: 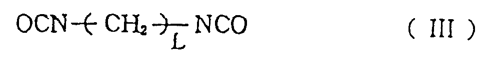 wherein L denotes an integer of 1 to 12.

The addition amount of the diisocyanate is preferably 5 to 40 wt.%, more preferably 10 to 35 wt.%. The amount of the diisocyanate less than 5 wt.% or more than 40 wt.% is not effective for the expression of the rubber elasticity of a sugar polymer compound due to the cross-linking reaction by the following reason. If the amount of the diisocyanate is less than 5 wt.%, the cross-linking network of the sugar polymer compound is insufficient to obtain sufficient rubber elasticity, and if the amount of the diisocyanate is more than 40 wt.%, the cross-linking becomes dense making the elastomer solid.

Diisocyanate can be mixed with a sugar polymer compound, for example, by uniformly dissolving the diisocyanate and a sugar polymer compound in a solvent (e.g. acetone) which is inert to the diisocyanate and capable of dissolving the sugar polymer compound, followed by removing the solvent and sufficiently drying to give a precursor of an elastomer. Any method is applicable so long as it can evenly blend the diisocyanate and the sugar polymer compound.

The heating temperature of thermoforming is preferably 100 to 130°C, near to the softening temperature of the sugar polymer compound with any cross-linking agent.

As described above, items of a biodegradable elastomer can be produced by applying heat and pressure to a precursor of the elastomer produced by blending a cross-linking agent and a sugar polymer compound in a molding die of a desired shape. The heating temperature is preferably 100 to 130°C, near to the softening temperature of the sugar polymer compound. A variety of well-known additives may be used for the item so long as the additives would deteriorate rubber elasticity.

The elastomer of the present invention can biologically be decomposed in soil or in compost to reduce the load on the environment. Further, since such an elastomer is composed of sugars, aliphatic dicarboxylic acid and a cross-linking agent, it would not affect the environment on waste disposal, being an elastomer excellent in compatibility with the environment.

### [Examples]

Hereinafter, the present invention will be described in more detail along with Synthetic Examples and Examples, though the present invention is not limited to these examples. In these examples, part(s) means part(s) by weight.

### [Synthetic Example]

Synthetic examples of sugar polymer compounds to be used in the present invention will be described below.

### <Synthetic Example 1>

Fifty parts of D-glucopyranose was added to 200 parts of DMF (N,N-dimethylformamide) and 100 parts of pyridine, to which 120 parts of a DMF solution containing 20 parts of adipic acid chloride was slowly and dropwise added, and stirred at a room temperature for 1 hour. Further, another 70 parts of a DMF solution containing 20 parts of adipic acid chloride was dropwise added and stirred at a room temperature for 1 hour. Next, 130 parts of a DMF solution containing 30 parts of acetic acid anhydride was slowly and dropwise added and stirred for 1.5 hours. Then 130 parts of a DMF solution containing 30 parts of adipic acid chloride was slowly and dropwise added and stirred at room temperature for 1 hour, and then further 70 parts of a DMF solution containing 20 parts of adipic acid chloride was dropwise added and stirred at a room temperature for 10 hours.

The reaction was quenched by adding methanol, and then the solvent was removed by vacuum-distillation. The residue was sufficiently washed with water and then washed with methanol and further with diethyl ether. After re-precipitation of the residue from methanol-water, the residue was vacuum-dried to obtain 110 parts of a sugar polymer compound (hereinafter referred as to compound No. I-1).

The molecular weight of the sugar polymer compound synthesized as described above was determined by gel permeation chromatography (GPC) as follows. As a result, the weight average molecular weight was 1,000,000 on polysaccharide basis.

### <GPC conditions>

Apparatus: HLC-8120 GPC (made by Tosoh Corporation)
Column: Mixed-CX 2 columns (made by Polymer Laboratories Co.)
Eluent: DMF containing 0.1% of LiBr
Column oven temperature: 50°C

Next, infrared absorption (IR) spectrum of the above sugar polymer compound was measured by the KBr pellet method by using FT-IR FTS135 (made by BIO RAD). As a result, as shown in FIGURE, the O-H stretching vibration peak at 3460 cm⁻¹, the C-H stretching vibration peaks of methylene group derived from adipic acid at 2938 cm⁻¹ and 2859 cm⁻¹, a C=O stretching vibration peak near 1750 cm⁻¹, the δasCH₃ peak and the δsCH₃ peak of acetyl group at 1430 cm⁻¹ and 1380 cm⁻¹, and the C-C(=O)-O stretching vibration peak of the ester bond at 1230 cm⁻¹ were observed to show that an object sugar polymer compound was obtained.

Further, the obtained product was subjected to ¹³C-NMR by using FT-NMR DPX 400 (Bruker), carbonyl-carbon of adipic acid at 173 ppm, carbonyl-carbon of acetyl group at 169 ppm, methylene-carbon derived from adipic acid at 24 ppm and 33 ppm, and methyl-carbon of acetyl group at 20 ppm were observed. According to the above-mentioned measurement results, it was confirmed that an object sugar polymer compound was synthesized.

### <Synthesis Example 2>

Sugar polymer compounds were synthesized in the same manner as in Synthesis Example 1 except that D-glucopyranose and adipic acid used in Synthesis Example 1 were changed to the combinations as shown in Table 1.

**[Table 1]**

| Compound No. | G | R | Weight average molecular weight | Softening temperature °C |
|---|---|---|---|---|
| I-1 | glucopyranose | (CH₂)₄ | 1,000,000 | 101 |
| I-2 | mannopyranose | (CH₂)₈ | 110,000 | 90 |
| I-3 | galactopyranose | (CH₂)₁₆ | 490,000 | 95 |
| I-4 | maltose | (CH₂)₆ | 610,000 | 96 |
| I-5 | lactose | (CH₂)₁₀ | 240,000 | 92 |
| I-6 | cellobiose | (CH₂)₁₄ | 920,000 | 99 |
| I-7 | maltotriose | (CH₂)₅ | 190,000 | 91 |
| I-8 | chitotriose | (CH₂)₁₃ | 290,000 | 93 |
| I-9 | cellotetraose | (CH₂)₇ | 730,000 | 97 |
| I-10 | maltopentaose | (CH₂)₁₂ | 470,000 | 95 |
| I-11 | cellopentaose | (CH₂)₉ | 120,000 | 91 |
| I-12 | maltohexaose | (CH₂)₁₁ | 710,000 | 98 |
| I-13 | chitohexaose | (CH₂)₁₅ | 380,000 | 94 |

### Examples 1 to 13

### - Production of elastomer-

Each sugar polymer compound obtained in the above Synthetic Examples was mixed with a diepoxide of general formula (II) or a diisocyanate of general formula (III) as a cross-linking agent by dissolving them in acetone which is a solvent inert to the cross-linking agent and capable of dissolving the sugar polymer compound. After that, the solvent was removed and the residue was dried to obtain an elastomer precursor. Further, the precursor was subjected to thermoforming at 100 to 130°C for 5 minutes to obtain an object elastomer. The types and the addition amounts of cross-linking agents are shown in Table 2 and Table 3.

### - Rubber elasticity evaluation -

Evaluation of rubber elasticity was carried out using samples of 40 mm × 10 mm × 2 mm sheet cut out from the obtained elastomer. The mark A is assigned to those which could restore the original shape without cracking, mark B to those which could not restore the original shape but with no crack, and mark C to those which cracked, when the samples were folded at 90° and then released from the folding force. The rubber elasticity evaluation results were shown in Table 2 and Table 3.

### - Biodegradability evaluation -

Evaluation of biodegradability was carried out for the samples of 40 mm × 10 mm × 2 mm sheet cut out from the obtained elastomer, by burying the samples in soil 50 cm deep and evaluating the biodegradation of the samples after 90 days. Mark A was assigned to those which were decomposed and mark C to those which were not decomposed. The biodegradability evaluation results were shown in Table 2 and Table 3.

Comparative Examples 1-3 were carried out for comparison with the present invention.

### Comparative Example 1

Tufprene A (produced by Asahi Chemical Industry Co., Ltd.), which is a diene rubber, was used as a comparative elastomer and subjected to the evaluation in the same manner as Examples 1 to 13.

### Comparative Example 2

KE 650 U (produced by Shin-Etsu Chemical Co., Ltd.), which is a silicone rubber, was used as a comparative elastomer and subjected to the evaluation in the same manner as Examples 1 to 13.

### Comparative Example 3

FC 3009 (produced by Sumitomo 3M Ltd.), which is a fluororubber, was used as a comparative elastomer and subjected to the evaluation in the same manner as Examples 1 to 13.

**[Table 2]**

| Example | Elastomer | Compound | Cross-linking agent | Addition amount (wt.%) | Rubber elasticity | Biodegradability |
|---|---|---|---|---|---|---|
| Example 1 | elastomer 1 | No. I-1 | diepoxide m = 4 | 10 | R | A |
| Example 2 | elastomer 2 | No. I-2 | diisocyanate L = 1 | 20 | A | A |
| Example 3 | elastomer 3 | No. I-3 | diepoxide m = 0 | 30 | A | A |
| Example 4 | elastomer 4 | No. I-4 | diisocyanate L = 2 | 15 | A | A |
| Example 5 | elastomer 5 | No. I-5 | diepoxide m = 7 | 25 | A | A |
| Example 6 | elastomer 6 | No. I-6 | diisocyanate L = 6 | 35 | A | A |
| Example 7 | elastomer 7 | No. I-7 | diepoxide m 10 | 10 | A | A |
| Example 8 | elastomer 8 | No. I-8 | diisocyanate L = 12 | 20 | A | A |
| Example 9 | elastomer 9 | No. I-9 | diepoxide m = 11 | 30 | A | A |

**[Table 3]**

| Example | Elastomer | Compound | Cross-linking agent | Addition amount (wt.%) | Rubber elasticity | Biodegradability |
|---|---|---|---|---|---|---|
| Example 10 | elastomer 10 | No. I-10 | diisocyanate L = 5 | 15 | A | A |
| Example 11 | elastomer 11 | No. I-11 | diepoxide m = 3 | 25 | A | A |
| Example 12 | elastomer 12 | No. I-12 | diisocyanate L = 8 | 35 | A | A |
| Example 13 | elastomer 13 | No. I-13 | diepoxide m = 9 | 10 | A | A |
| Comparative Example 1 | elastomer 14 | diene rubber | - | - | A | C |
| Comparative Example 2 | elastomer 15 | silicone rubber | - | - | A | C |
| Comparative Example 3 | elastomer 16 | fluoro-rubber | - | - | A | C |

As shown in Table 2 and Table 3, an elastomer composed of a sugar polymer compound and a cross-linking agent the present invention had the excellent rubber plasticity and biodegradability as well.

### Example 14

### - Production of items of biodegradable elastomer -

Items of 5 mm thickness were produced by applying heat and pressure to a precursor made from a sugar polymer compound and a cross-linking agent in Examples 1 to 13 in a die (height 10 cm × width 10 cm) made of Teflon (product name). The forming conditions were: temperature: 100 to 130°C, pressure: 9.8 × 10⁻³ to 1.5 × 10⁻² Pa (10 to 15 kgf/cm²) and the time: 5 minutes. As a result, in all cases, sheet-like items having rubber elasticity were obtained.

## Claims

1. A biodegradable elastomer obtained by blending a sugar polymer compound represented by general formula (I) with a diepoxide represented by general formula (II) as a cross-linking agent: 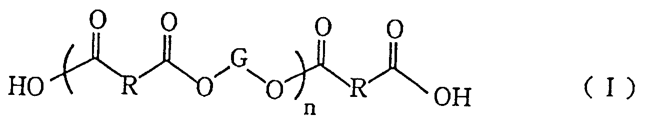 wherein G denotes a unsubstituted sugar residue or a sugar residue of which at least one hydroxyl group not participating in polymerization is substituted with an ester group; R denotes a substituted or unsubstituted aliphatic hydrocarbon group having 4 to 16 carbons; and n is an integer of from 1 to 5,000, 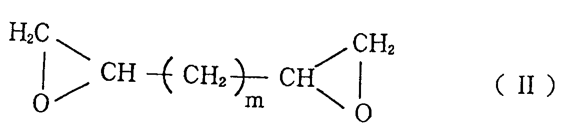 wherein, m is 0 or an integer of from 1 to 12.

2. A biodegradable elastomer obtained by blending a sugar polymer compound represented by general formula (I) with a diisocyanate represented by general formula (III) as a cross-linking agent: 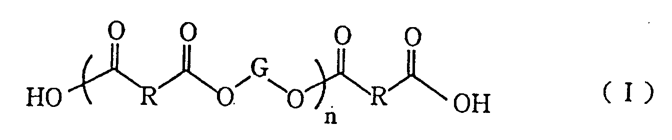 wherein, G denotes a unsubstituted sugar residue or a sugar residue of which at least one hydroxyl group not participating in polymerization is substituted with an ester group; R denotes a substituted or unsubstituted aliphatic hydrocarbon group having 4 to 16 carbons; and n is an integer of from 1 to 5,000, 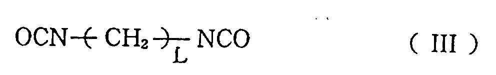 wherein, L denotes an integer from 1 to 12.

3. The biodegradable elastomer of claim 1 or claim 2, wherein G of the general formula (I) is a monosaccharide residue.

4. The biodegradable elastomer of claim 1 or claim 2, wherein G of the general formula (I) is an oligosaccharide residue.

5. An item being produced by forming a biodegradable elastomer of claim 1 or claim 2.

6. A method for producing an item comprising a step of forming a biodegradable elastomer of claim 1 or claim 2 by applying heat and pressure to the elastomer.
